# EUROPÄISCHE PATENTANMELDUNG

(11) **EP 1 081 301 A2**
(43) Veröffentlichungstag der Anmeldung: **07.03.2001**
(21) Anmeldenummer: 00117579.3
(22) Anmeldetag: 16.08.2000
(51) Int. Cl.: E04B 1/90

(54) **Dämmelement zur Wärme- und/oder Schalldämmung von Gebäudewänden**

(30) Priorität: 03.09.1999 DE 29915463 U
(71) Anmelder: Deutsche Rockwool Mineralwoll-GmbH, 45966 Gladbeck (DE)
(72) Erfinder: Klose, Gerd-Rüdiger, Dr., 46286 Dorsten (DE)
(74) Vertreter: Wanischeck-Bergmann, Axel

(57) **Zusammenfassung**

Die Erfindung betrifft ein Dämmelement zur Wärme- und/oder Schalldämmung von Gebäudewänden, insbesondere Außenfassaden von Gebäuden, bestehend aus einer ersten Schicht aus einem faserigen Dämmstoff, insbesondere aus Mineralfasern, vorzugsweise Steinwolle, oder Polystyrol, und einer zweiten, als Beschichtung ausgebildeten Schicht, die auf zumindest einer großen Oberfläche der ersten Schicht, vorzugsweise flächendeckend angeordnet ist. Ein derartiges Dämmelement weist auch bei geringer Rohdichte der Dämmstoffschicht eine ausreichende Eigensteifigkeit für die Verwendung im Außenfassadenbereich auf.

## Beschreibung

Die Erfindung betrifft ein Dämmelement zur Wärme- und/oder Schalldämmung von Gebäudewänden, insbesondere Außenfassaden von Gebäuden, bestehend aus einer ersten Schicht aus einem faserigen Dämmstoff, insbesondere aus Mineralfasern, vorzugsweise Steinwolle, oder Polystyrol, und einer zweiten, als Beschichtung ausgebildeten Schicht, die auf zumindest einer großen Oberfläche der ersten Schicht, vorzugsweise flächendeckend angeordnet ist.

Dämmelemente zur Wärme- und/oder Schalldämmung von Gebäudewänden können aus Glasfasern bestehen, die mit weniger als 6 Masse-% eines duroplastisch aushärtenden Gemisches, beispielsweise Phenol-Formaldehyd-Harnstoffharzen gebunden sind. Zur Hydrophobierung der Fasermassen enthalten derartige Mineralwolle-Dämmelemente Öle in Mengen von weniger als 0,4 Masse-%. Derartige Mineralwolle-Dämmelemente werden beispielsweise für die Wärmedämmung von Außenwänden eingesetzt, wobei sie durch vorgehängte und hinterlüftete Bekleidungen gegen Witterungseinflüsse geschützt sind. Die Befestigung derartiger Dämmelemente erfolgt mit Hilfe von Haltetellern, die in der Außenwand verankert sind. Die Anzahl der Halteteller ist abhängig von der Steifigkeit der Dämmelemente, insbesondere von der Festigkeit der äußeren Oberfläche. Es hat sich gezeigt, daß relativ steife Platten eine geringere Anzahl von Haltetellern benötigen, als beispielweise Dämmelemente aus ausgesprochen flexiblen Materialen, bei denen die Halter auch die Oberfläche, insbesondere die gegeneinander verspringenden Kanten einzelner Dämmelemente herunterdrücken müssen. Ergänzend zu den Haltetellern kann bei Wärmedämmverbundsystemen vorgesehen sein, daß die Dämmelementen auf die Außenwände aufgeklebt sind. Um das notwendige Haltevermögen zu erreichen, werden Klebemörtel verwendet, die relativ steif sind und daher nicht besonders gut auf den Oberflächen der Dämmelemente haften. Hinzukommt, daß zum Ausgleich unebener Außenwandflächen eine verhältnismäßig dicke Schicht Klebemörtel auf das Dämmelement oder die Außenwand aufgetragen werden muß. Hierdurch kommt es regelmäßig zu einem hohen Verlust von Klebemörtel, der nach seinem Auftrag auf die Außenfläche abbröckelt bzw. bei der kurz vor der Befestigung notwendigen horizontalen Ausrichtung des Dämmelementes von dessen Oberfläche abrutscht. Hierdurch ist es erforderlich, die Verarbeitung derartiger Dämmelemente äußerst sorgfältig vorzunehmen, was gut ausgebildete Arbeitskräfte erfordert. Neben hohen Personalkosten hat es sich aber auch als kostenintensiv gezeigt, daß ein relativ großer Verlust an Klebemörtel verursacht wird. Hierbei ist eine rationelle Vorgehensweise darin zu sehen, daß der Klebemörtel auf die Wandflächen aufgespritzt und die Dämmelemente anschließend in den aufgespritzten Klebemörtel gedrückt werden. Auch diese Vorgehensweise setzt voraus, daß unmittelbar nach dem Hineindrücken der Dämmstoffelemente eine kraftschlüssige Verbindung gebildet wird, damit die Dämmelemente nicht unverzüglich von der Wand abfallen.

Nachdem die Dämmelemente mit Klebemörtel auf einer Außenwand vollflächig angeordnet sind, werden anschließend zumindest zwei Putzschichten aufgetragen, wobei die untere Putzschicht mit einem Glasfaser-Gittergewebe bewehrt ist. Aus Gründen der Materialersparnis werden die Putzschichten lediglich in einer Materialstärke von zwei bis drei Millimetern und somit sehr dünn ausgeführt. Das Auftragen einer Putzschicht in einer derart dünnen Materialstärke ist arbeitstechnisch sehr schwierig, da die Oberfläche derartiger Dämmelemente wasserabweisend ist und weniger fest eingebundene Fasern durch die Schwerwirkung des zähplastischen Putzes aus dem Verbund herausgerissen werden können. Auch das Auftragen des Putzes erfordert somit gut ausgebildete Fachkräfte.

Das Herausreißen der weniger fest eingebundenen Fasern führt ferner dazu, daß auch die Putzschicht in bestimmten Bereichen aufreißt. Die mitgeführten Fasern ballen sich zu Faserflocken zusammen und stören in der Folge die Homogenität der Putzschicht. In zahlenmäßig nicht unbeachtlichen Fällen muß deshalb die untere Putzschicht nach dem Erhärten durch einen weiteren Auftrag ergänzt werden, um eine ebene Fläche für die deckende Putzschicht zu erhalten. Auch diese zusätzlichen Arbeiten erhöhen die Herstellungskosten.

Um die voranstehend genannten Nachteilen bei Dämmelementen aus Mineralwollefasern zu vermeiden, sind werkseitig aufgebrachte Deckschichten bekannt. Diese Deckschichten müssen zum einen selbst auf der Oberfläche der Dämmelemente haften und zum anderen eine ausreichende Stabilität aufweisen, soweit ein derart ausgebildetes System extremen Feuchte- und Temperaturbelastungen ausgesetzt wird. Die Gebrauchsdauer derartiger Systeme wird in entsprechenden Eignungstest simuliert, um eine langandauernde Beanspruchung darstellen und prüfen zu können. Auf der anderen Seite erfordert es die Wirtschaftlichkeit der Herstellung derartiger Dämmelemente, daß die Deckschichten relativ dünn und nicht zu fest sind, um derartige Dämmelemente auch weiterhin auf Baustellen mit üblichen Schneidgeräten zuschneiden zu können. Es hat sich daher in der Praxis als ausreichend erwiesen, die Dämmelemente mit maximal 5 mm dicken Schichten eines Klebemörtels zu versehen, um sowohl eine leichtere Verklebung und gleichzeitig eine günstigere Krafteinteilung bei partiellem Klebeauftrag zu erreichen. Die außen aufgestrichene Putzschicht atmet aufgrund der Deckschicht unmittelbar nach ihrem Auftrag. Darüber hinaus bietet die Deckschicht eine so große Quersteifigkeit, daß es beim Auftrag der Putzschicht zu keinen Verformungen der Oberflächenschicht kommt. Die Putzschicht kann also unabhängig von ihrer Viskosität aufgezogen werden.

Eine alternative Deckschicht besteht aus einer Silikatfarbe, die in Mengen von ca. 80 bis 200 g Trockensubstanz/m² auf die Oberfläche des Dämmelementes aufgesprüht wird. Diese Farbe hat aber den Nachteil, daß die derart behandelten Dämmelemente wenig biegefest sind, so daß die Dämmelemente bereits bei geringem Druck schollenartig brechen.

Weiterhin ist es bekannt, eine Kieselsol-Lösung auf die Oberfläche eines Dämmelementes aufzubringen, wobei diese Lösung in geringen Mengen von ca. 30 bis 100 g Trockensubstanz/m² auf der Oberfläche des Dämmstoffs verteilt wird. Nach dem Austrocknen der Lösung bleiben sehr feine Partikel in den Porenräumen zwischen den Fasern zurück, die eine relativ gut Benetzung des Dämmstoffs durch den Klebemörtel oder den Putz ermöglichen. Die Abriebfestigkeit dieser Beschichtung ist aber sehr gering. Darüber hinaus hat diese Art der Deckschicht den Nachteil, daß die in diesem Zusammenhang verwendeten oberflächenaktiven Mittel die wasserabweisende Wirkung der Oberfläche zumeist aufheben.

Ausgehend von diesem Stand der Technik liegt der Erfindung die **Aufgabe** zugrunde, ein Dämmelement zu schaffen, das auch bei geringer Rohdichte der Dämmstoffschicht eine ausreichende Eigensteifigkeit für die Verwendung im Außenfassadenbereich aufweist.

Die **Lösung** dieser Aufgabenstellung sieht vor, daß die zweite als Beschichtung ausgebildete Schicht im wesentlichen aus einem aufgeschäumten Natrium- oder Kaliumwasserglas bzw. Mischungen daraus besteht.

Somit sind zwei wesentliche Punkte bei der erfindungsgemäßen Ausgestaltung eines Dämmelementes zu erfüllen, um die erfindungsgemäße Aufgabe zu lösen. Zum einen wird als Beschichtung ein Natriumwasserglas, ein Kaliumwasserglas oder eine Mischung aus einem Natrium- und Kaliumwasserglas auf die Oberfläche der ersten Schicht aufgetragen. Nach dem Auftrag der Wassergläser werden diese aufgeschäumt, so daß sich die vorteilhaften Wirkungen eines Schaums in Verbindung mit den voranstehenden Wassergläsern ergibt. Die vorteilhaften Wirkungen des Schaums sind dann zu sehen, daß nach dem Austrocknen des Schaums sehr feine Partikel in den Porenräumen zwischen Fasern zurückbleiben, die eine relativ gute Benetzung des Dämmstoffs durch den Klebemörtel oder den Putz ermöglichen. Ferner weist der Schaum eine niedrigere Wärmeleitfähigkeit auf.

Nach einem weiteren Merkmal der Erfindung ist vorgesehen, daß die zweite Schicht auf beiden großen Oberflächen der ersten Schicht angeordnet ist. Diese Ausgestaltung hat den Vorteil, daß das erfindungsgemäße Dämmelement nicht nur eine besonders große Affinität zum aufzutragenden Putz, sondern andererseits auch zum Klebemörtel aufweist, so daß sich insgesamt ein sehr fester Verbund aus Dämmelementen und Gebäudefassade ergibt.

Um die Brandweiterleitung in einer Dämmschicht aus Polystyrol-Hartschaum zu verhindern wird der Schaum auf eine, zwei sich gegenüberliegende oder alle vier Seitenflächen von Polystyrol-Hartschaumplatten aufgebracht.

Durch die teil- oder vollflächige bzw. vollständige Ummantelung der ersten Schicht mit der zweiten Schicht wird eine Brandweiterleitung durch den entflammbaren Polystyrol-Hartschaum verhindert. Die beschichteten Seitenflächen verbleiben bei einem Brandangriff als ein Stützgerüst, das aber im normalen Gebrauch aufgrund der geringen Wärmeleitfähigkeit nicht wie eine Wärmebrücke wirkt, und sich deshalb auch nicht durch die Putzschichten des Wärmedämmverbundsystems als solche abzeichnet.

Es hat sich als vorteilhaft erwiesen, die zweite Schicht mit einer Rohdichte zwischen 30 und 100 kg/m³ auszubilden. Vorzugsweise weist die zweite Schicht eine Dicke von maximal 20 mm, vorzugsweise 5 bis 10 mm auf, um die Wärmedämmleistung der ersten Schicht nicht zu beeinträchtigen. Ein derartig ausgebildetes Dämmelement hat darüber hinaus ein handhabbares Gewicht, so daß dies mit der Verarbeitung derartiger Dämmelemente beauftragten Arbeitskräfte nicht durch zu hohe Gewichte belastet werden, die die Arbeitsleistung bereits nach kurzer Zeit verringern.

Da die Schichtdicken des Klebemörtels einerseits und der Putzschicht andererseits unterschiedlich sind, hat es sich nach einem weiteren Merkmal der Erfindung als vorteilhaft herausgestellt, auch die Beschichtungen auf den beiden großen Oberflächen der ersten Schicht hinsichtlich ihrer Dicke und Rohdichte unterschiedlich auszubilden. Hierbei sollte die Beschichtung in Abhängigkeit ihres Einsatzzweckes auf den Klebemörtel bzw. die Putzschicht abgestimmt sein, Im übrigen ergibt sich durch die unterschiedlich dicken Beschichtungen auf den großen Oberflächen der ersten Schicht ein Dämmelement, das hinsichtlich einer bestimmten Orientierung beim Einbau im Außenfassadenbereich schnell und einfach erkennbar ist. Durch eine Pigmentierung der Beschichtung kann darüber hinaus eine weitere Markierung des Dämmelements für einen vorschriftsgemäßen Einbau vorgesehen sein.

Zur Verstärkung der Beschichtung ist nach einem weiteren Merkmal der Erfindung vorgesehen, daß in der zweiten Schicht ein Fasergewebe, insbesondere aus Glasfasern eingebettet ist. Alternativ bzw. ergänzend kann vorgesehen sein, daß die zweite Schicht durch Mineralfasern mit Längen kleiner gleich 30 mm, vorzugsweise kleiner gleich 10 mm verstärkt ist. Insgesamt können in der zweiten Schicht 1 bis 100 Masse-% Mineralfasern vorgesehen sein.

Schließlich ist bei der Erfindung vorgesehen, daß die Beschichtung mineralische Leichzuschläge, beispielsweise aus Bims, Perlite und/oder Porenbeton, vorzugsweise in Mengen von 5 bis 70 Masse-% enthält. Die Leichtzuschläge können selbstverständlich mit den Mineralfaserzusätzen kombiniert werden.

Weitere Merkmale und Vorteil der Erfindung ergeben sich aus der nachfolgenden Beschreibung der zugehörigen Zeichnung. In der Zeichnung zeigen:
- Figur 1: eine erste Ausführungsform eines Dämmelementes und
- Figur 2: eine zweite Ausführungsform eines Dämmelementes.

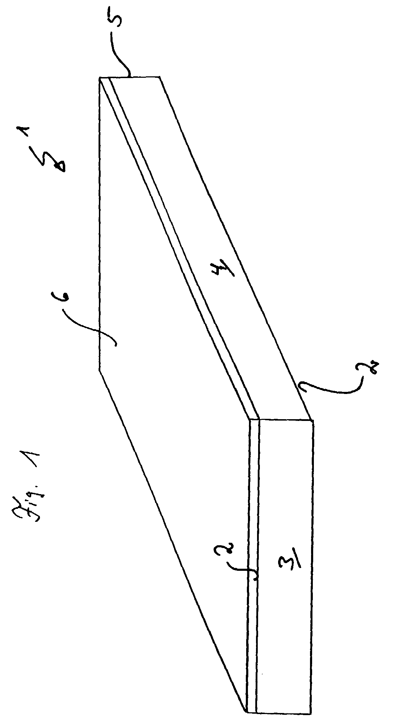

In Figur 1 ist ein erfindungsgemäßes Dämmelement zur Wärme- und/oder Schalldämmung von Gebäudenaußenwänden in perspektivischer Ansicht dargestellt. Das Dämmelement ist als Parallelepiped 1 ausgebildet und weist zwei parallel zueinander ausgerichtete und im Abstand zueinander angeordnete große Oberflächen 2 sowie zwei Schmalseiten 3 und zwei Längsseiten 4 auf, wobei die beiden Schmalseiten 3 und die beiden Längsseiten 4 jeweils parallel zueinander ausgerichtet sind. Das Dämmelement besteht aus einer ersten Schicht 5 aus Steinwollefasern sowie einer auf einer Oberfläche 2 angeordneten und vollflächig aufgetragenen zweiten Schicht 6, die aus einem aufgeschäumten Natriumwasserglas besteht. Alternativ kann die zweite Schicht 6 aus einem aufgeschäumten Kaliumwasserglas bzw. aus einer Mischung aus Natrium- und Kaliumwasserglas bestehen.

Die zweite Schicht 6 ist als Beschichtung ausgebildet, wobei die zweite Schicht 6 eine Rohdichte von 50 kg/m³ sowie eine Dicke von 10 mm aufweist. Die zweite Schicht 6 ist demzufolge gegenüber der ersten Schicht 5 verhältnismäßig dünn ausgebildet.

In der zweiten Schicht 6 ist ein nicht näher dargestelltes Fasergewebe aus Glasfasern eingebettet. Das Fasergewebe führt zu einer gleichmäßigen Verteilung der Zugkräfte z.B. bei partieller Verklebung. Ergänzend zu diesem Fasergewebe aus Glasfasern weist die zweite Schicht 6 eingelagerte Mineralfasern mit Längen von maximal 8 mm auf, wobei der Anteil an Mineralfasern in einer Menge von ca. 1 bis 75 Masse-% in der zweiten Schicht 6 vorgesehen sind.

Neben den Mineralfasern weist die zweite Schicht 6 0,5 bis 15 Masse-% Polyesterfasern auf, die gemeinsam mit den Mineralfasern oder alleine vorgesehen sein können. Darüber hinaus kann die zweite Schicht 6 zusätzlich Bims, Perlite und/oder Porenbeton in feiner Körnung aufweisen.

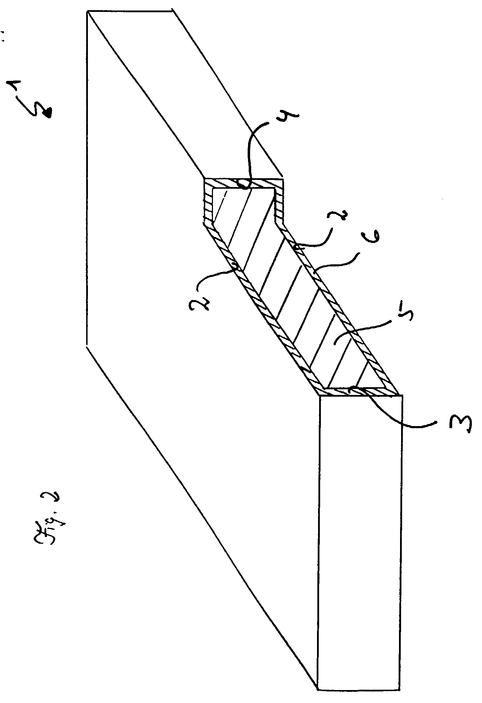

In Figur 2 ist eine zweite Ausführungsform eines Dämmelementes in teilweise geschnitten dargestellter perspektivischer Ansicht dargestellt. Der Aufbau dieses Dämmelementes gemäß Figur 2 entspricht geometrisch dem Aufbau des Dämmelements gemäß Figur 1. Es handelt sich ebenfalls um ein Parallelepiped 1.

Die erste Schicht 5 besteht aber bei dem Ausführungsbeispiel gemäß Figur 2 aus Polystyrolfasern, die zweite Schicht 6 ist darüber hinaus auf beide großen Oberflächen 2 der ersten Schicht 5 sowie auf die Schmalseiten 3 und auf die beiden Längsseiten 4 aufgetragen, so daß die erste Schicht 5 vollständig von der zweiten Schicht 6 ummantelt ist.

Ein derart ausgebildetes Dämmelement kann beispielsweise als erste Schicht 5 auch eine Polystyrol-Hartschaumplatte aufweisen.

## Patentansprüche

1. Dämmelement zur Wärme- und/oder Schalldämmung von Gebäudewänden, insbesondere Außenfassaden von Gebäuden, bestehend aus einer ersten Schicht (5) aus einem faserigen Dämmstoff, insbesondere aus Mineralfasern, vorzugsweise Steinwolle, oder Polystyrol-Hartschaum und einer zweiten, als Beschichtung ausgebildeten Schicht (6), die auf zumindest einer großen Oberfläche (2) der ersten Schicht (5) vorzugsweise flächendeckend angeordnet ist und im wesentlichen aus einem aufgeschäumten Natrium- oder Kaliumwasserglas bzw. Mischungen daraus besteht.

2. Dämmelement nach Anspruch 1,
**dadurch gekennzeichnet,**
daß die zweite Schicht auf beiden großen Oberflächen (2) der ersten Schicht (5) angeordnet ist.

3. Dämmelement nach Anspruch 1,
**dadurch gekennzeichnet,**
daß die zweite Schicht (6) auf zumindest einem Teil der Seitenflächen (3, 4) der ersten Schicht (5) angeordnet ist.

4. Dämmelement nach Anspruch 1,
**dadurch gekennzeichnet,**
daß die zweite Schicht (6) eine Rohdichte zwischen 30 und 100 kg/m³ aufweist.

5. Dämmelement nach Anspruch 1,
**dadurch gekennzeichnet,**
daß die zweite Schicht (6) eine Dicke von maximal 20 mm, vorzugsweise 5 bis 10 mm aufweist.

6. Dämmelement nach Anspruch 2,
**dadurch gekennzeichnet,**
daß die Beschichtungen auf den beiden großen Oberflächen (2) der ersten Schicht (5) hinsichtlich ihrer Dicke und Rohdichte unterschiedlich ausgebildet sind.

7. Dämmelement nach Anspruch 1,
**dadurch gekennzeichnet,**
daß in der zweiten Schicht (6) ein Fasergewebe, insbesondere aus Glasfasern eingebettet ist.

8. Dämmelement nach Anspruch 1,
**dadurch gekennzeichnet,**
daß die zweite Schicht (6) durch Mineralfasern mit Längen kleiner gleich 30 mm, vorzugsweise kleiner gleich 10 mm verstärkt ist.

9. Dämmelement nach Anspruch 8,
**dadurch gekennzeichnet,**
daß die zweite Schicht (6) 1 bis 100 Masse-% Mineralfasern aufweist.

10. Dämmelement nach Anspruch 1,
**dadurch gekennzeichnet,**
daß die Beschichtung mineralische Leichtzuschläge, beispielsweise aus Bims, Perlite und/oder Porenbeton, vorzugsweise in Mengen von 5 bis 70 Masse-% enthält.

11. Dämmelement nach Anspruch 1,
**dadurch gekennzeichnet,**
daß die zweite Schicht (6) Polyesterfasern, insbesondere im Umfang von 0,5 bis 15 Masse-% aufweist.
